# EUROPEAN PATENT APPLICATION

(11) **EP 4 811 145 A2**
(43) Date of publication of application: **23.09.2026**
(21) Application number: 26191856.9
(22) Date of filing: 14.07.2026
(51) Int. Cl.: G06F 12/109, G06F 12/14, G06F 12/1009, G06F 12/1036

(54) **SMMU MANAGEMENT METHOD, APPARATUS, ELECTRONIC DEVICE, AND COMPUTER-READABLE STORAGE MEDIUM**

(30) Priority: 26.12.2025 CN 202511999430
(71) Applicant: XG TECH PTE. LTD., Singapore 179098 (SG)
(72) Inventor: LIN, Wei, Singapore 179098 (SG); TAO, Xinzhi, Singapore 179098 (SG); DENG, Jie, Singapore 179098 (SG); CHEN, Zhou, Singapore 179098 (SG); GAO, Junhao, Singapore 179098 (SG)
(74) Representative: Kohler Schmid Möbus Patentanwälte

(57) **Abstract**

Disclosed are a system memory management unit (SMMU) management method, an apparatus, an electronic device, and a computer-readable storage medium. The method is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. The method includes: in response to the respective virtual machines performing configuration operations on the address translation configurations of the respective virtual SMMUs, obtaining the address translation configurations of the respective virtual SMMUs; and performing an update operation on the address translation configuration of the physical SMMU based on the address translation configurations of the respective virtual SMMUs.

## Description

### TECHNICAL FIELD

The present disclosure relates to the field of computer technology, and in particular, to a system memory management unit (SMMU) management method, an apparatus, an electronic device, and a computer-readable storage medium.

### BACKGROUND

With the rapid development of intelligent driving technology, cockpit-driving integration has gradually become a core development trend of intelligent driving technology. A cockpit-driving fusion chip, as core hardware supporting the integrated and collaborative operation of multiple cockpit-driving systems such as an intelligent driving system, an infotainment cockpit system, and a digital instrument cluster system, has its flexibility and security of resource allocation directly affecting the intelligent experience and operational reliability of the entire vehicle.

In a cockpit-driving fusion chip, in order to ensure effective isolation of physical resources among different cockpit-driving systems, physical devices allocated to the same cockpit-driving system are uniformly connected to one or more physical SMMUs (system memory management units), and the cockpit-driving system independently performs address translation operations on the physical devices through the SMMU to prevent unauthorized access and data leakage.

### SUMMARY

To solve the above technical problems, the present disclosure provides an SMMU management method, an apparatus, an electronic device, and a computer-readable storage medium, so as to enable multiple cockpit-driving systems to access and configure a physical SMMU, enabling dynamic reassignment of physical devices among the multiple cockpit-driving systems based on demand, thereby improving the flexibility of physical device allocation among the multiple cockpit-driving systems.

An embodiment of a first aspect of the present disclosure provides an SMMU management method. The method is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. The method includes:
in response to the respective virtual machines performing configuration operations on the address translation configurations of the respective virtual SMMUs, obtaining the address translation configurations of the respective virtual SMMUs; and
performing an update operation on the address translation configuration of the physical SMMU based on the address translation configurations of the respective virtual SMMUs.

An embodiment of a second aspect of the present disclosure provides an SMMU management apparatus. The apparatus is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. The apparatus includes:
a first address translation configuration obtaining module, configured to, in response to the respective virtual machines performing configuration operations on the address translation configurations of the respective virtual SMMUs, obtain the address translation configurations of the respective virtual SMMUs; and
a first address translation configuration updating module, configured to perform an update operation on the address translation configuration of the physical SMMU based on the address translation configurations of the respective virtual SMMUs.

An embodiment of a third aspect of the present disclosure provides a computer-readable storage medium. The storage medium stores a computer program. The computer program is executed by a processor to perform the SMMU management method provided by the embodiment of the first aspect described above.

An embodiment of a fourth aspect of the present disclosure provides an electronic device. The electronic device includes: a processor; a memory for storing executable instructions of the processor; and the processor, configured to read the executable instructions from the memory and execute the instructions to implement the SMMU management method provided by the embodiment of the first aspect described above.

An embodiment of a fifth aspect of the present disclosure provides a computer program product. When instructions in the computer program product are executed by a processor, the SMMU management method provided by the embodiment of the first aspect of the present disclosure is performed.

Embodiments of the present disclosure provide an SMMU management method, an apparatus, an electronic device, and a computer-readable storage medium. The method is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. A hypervisor obtains, in response to the respective virtual machines performing configuration operations on the address translation configurations of the respective virtual SMMUs, the address translation configurations of the respective virtual SMMUs. Then, the hypervisor performs an update operation on the address translation configuration of the physical SMMU based on the address translation configurations of the respective virtual SMMUs. In this way, the hypervisor creates virtual SMMUs bound to the physical SMMU in the respective virtual machines, obtains the address translation configurations of the respective virtual SMMUs from the respective virtual machines, and performs an update operation on the address translation configuration of the physical SMMU based on the address translation configurations of the respective virtual SMMUs, thereby enabling multiple cockpit-driving systems to access and configure the physical SMMU, enabling dynamic reassignment of physical devices among the multiple cockpit-driving systems based on demand, and thereby improving the flexibility of physical device allocation among the multiple cockpit-driving systems.

### BRIEF DESCRIPTION OF THE DRAWINGS

FIG. 1A is a structural diagram of an SMMU management system provided by an exemplary embodiment of the present disclosure.
FIG. 1B is a structural diagram of a virtual SMMU provided by an exemplary embodiment of the present disclosure.
FIG. 2 is a schematic flowchart of an SMMU management method provided by an exemplary embodiment of the present disclosure.
FIG. 3 is a schematic flowchart of an SMMU management method provided by another exemplary embodiment of the present disclosure.
FIG. 4 is a schematic flowchart of an SMMU management method provided by another exemplary embodiment of the present disclosure.
FIG. 5 is a schematic flowchart of an SMMU management method provided by another exemplary embodiment of the present disclosure.
FIG. 6 is a schematic flowchart of an SMMU management method provided by another exemplary embodiment of the present disclosure.
FIG. 7 is a schematic flowchart of an SMMU management method provided by another exemplary embodiment of the present disclosure.
FIG. 8 is a schematic diagram of an SMMU command queue provided by another exemplary embodiment of the present disclosure.
FIG. 9 is a schematic flowchart of an SMMU management method provided by another exemplary embodiment of the present disclosure.
FIG. 10 is a schematic diagram of an SMMU event queue provided by another exemplary embodiment of the present disclosure.
FIG. 11 is a schematic flowchart of an SMMU management method provided by another exemplary embodiment of the present disclosure.
FIG. 12 is a schematic structural diagram of an SMMU management apparatus provided by an exemplary embodiment of the present disclosure.
FIG. 13 is a structural diagram of an electronic device provided by an exemplary embodiment of the present disclosure.

### DETAILED DESCRIPTION OF THE EMBODIMENTS

To explain the present disclosure, exemplary embodiments of the present disclosure will be described in detail below with reference to the accompanying drawings. Obviously, the described embodiments are merely some, not all, of embodiments of the present disclosure. It should be understood that the present disclosure is not limited by the exemplary embodiments.

It should be noted that, unless otherwise specifically stated, the relative arrangements of components and steps, numerical expressions, and numerical values set forth in these embodiments do not limit the scope of the present disclosure.

### Application overview

The intelligent driving described in the present disclosure may encompass multiple fields such as automatic driving, assisted driving, and robotic systems. Automatic driving technology is dedicated to achieving fully autonomous driving of vehicles under various complex road conditions without human intervention, and is also referred to as unmanned driving, which represents an advanced form of intelligent driving. Assisted driving provides drivers with real-time road condition information, warnings, and partial driving operation support through a series of sensors and algorithms, such as automatic parking and adaptive cruise control, aiming to improve driving safety and convenience. Robotic systems further extend intelligent driving technology to fields such as service robots and industrial robots, enabling robots to autonomously navigate, avoid obstacles, and complete specific tasks in complex environments, such as logistics delivery and warehouse management, demonstrating the broad application potential of intelligent driving technology in different scenarios.

With the rapid development of intelligent driving technology, cockpit-driving integration has gradually become a core development trend of intelligent driving technology. A cockpit-driving fusion chip, as core hardware supporting the integrated and collaborative operation of multiple cockpit-driving systems such as an intelligent driving system, an infotainment cockpit system, and a digital instrument cluster system, has its flexibility and security of resource allocation directly affecting the intelligent experience and operational reliability of the entire vehicle.

In a cockpit-driving fusion chip, in order to ensure effective isolation of physical resources among different cockpit-driving systems, physical devices allocated to the same cockpit-driving system are uniformly connected to one or more physical SMMUs, and the cockpit-driving system independently performs address translation operations on the physical devices through the SMMU to prevent unauthorized access and data leakage.

However, during the processes of software development, system integration, and subsequent functional upgrades for intelligent driving vehicles, changes in functional requirements often occur. At this point, it is necessary to reassign a certain physical device under one cockpit-driving system to another cockpit-driving system. However, since the physical SMMU to which the physical device is connected does not support being accessed and configured by two cockpit-driving systems, dynamic reassignment of physical devices among multiple cockpit-driving systems based on demand is not possible, thereby constraining the flexibility of physical device allocation among the cockpit-driving systems.

Embodiments of the present disclosure provide an SMMU management method. The method is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. A hypervisor obtains, in response to the respective virtual machines performing configuration operations on the address translation configurations of the respective virtual SMMUs, the address translation configurations of the respective virtual SMMUs. Then, the hypervisor performs an update operation on the address translation configuration of the physical SMMU based on the address translation configurations of the respective virtual SMMUs. In this way, the hypervisor creates virtual SMMUs bound to the physical SMMU in the respective virtual machines, obtains the address translation configurations of the respective virtual SMMUs from the respective virtual machines, and performs an update operation on the address translation configuration of the physical SMMU based on the address translation configurations of the respective virtual SMMUs, thereby enabling multiple cockpit-driving systems to access and configure the physical SMMU, enabling dynamic reassignment of physical devices among the multiple cockpit-driving systems based on demand, and thereby improving the flexibility of physical device allocation among the multiple cockpit-driving systems.

### Exemplary system

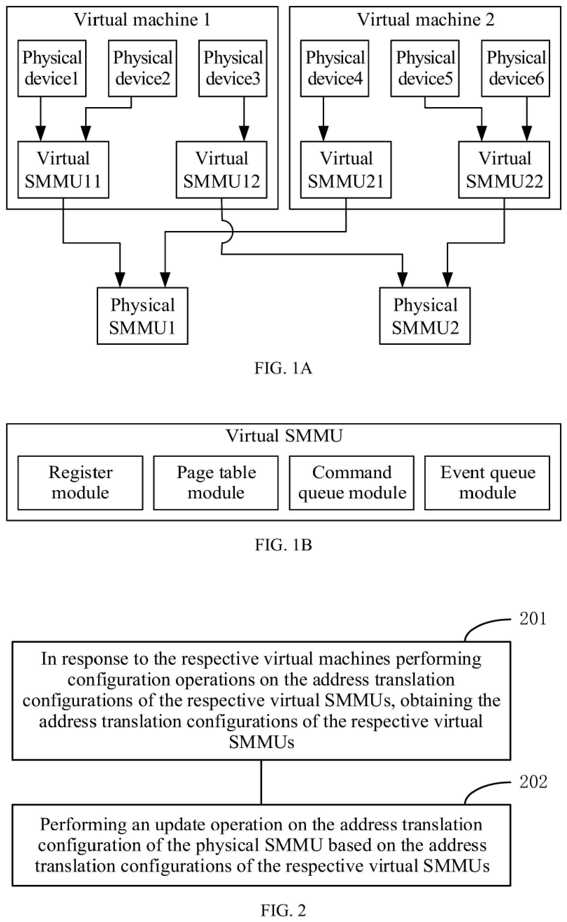

The SMMU management method in the embodiments of the present disclosure may be applied to an SMMU management system. The SMMU management system may be integrated on a cockpit-driving fusion chip. FIG. 1A is a structural diagram of an SMMU management system provided by an exemplary embodiment of the present disclosure. As shown in FIG. 1A, the SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. Referring to FIG. 1A, physical device 1 through physical device 6, as well as physical SMMU 1 and physical SMMU 2, are disposed on the cockpit-driving fusion chip. In the cockpit-driving fusion chip, physical device 1, physical device 2, and physical device 4 are connected to physical SMMU 1 through hardware circuits (not shown in FIG. 1A), and physical device 3, physical device 5, and physical device 6 are connected to physical SMMU 2 through hardware circuits (not shown in FIG. 1A). That is, regardless of which virtual machine physical device 1, physical device 2, and physical device 4 are allocated to, DMA (Direct Memory Access) requests from physical device 1, physical device 2, and physical device 4 can only be processed for address translation by physical SMMU 1. Similarly, DMA requests from physical device 3, physical device 5, and physical device 6 can only be processed for address translation by physical SMMU 2. Continuing to refer to FIG. 1A, the cockpit-driving fusion chip implements integration of multiple cockpit-driving systems through virtualization technology. A hypervisor creates virtual machine 1 and virtual machine 2 through virtualization technology. Different cockpit-driving systems may be deployed on virtual machine 1 and virtual machine 2. For example, an intelligent driving system is deployed on virtual machine 1, and an infotainment cockpit system is deployed on virtual machine 2. Different cockpit-driving systems may run on the same or different types of operating systems. Correspondingly, different virtual machines may run the same or different types of operating systems. For example, virtual machine 1 runs a Linux operating system with the intelligent driving system deployed thereon, and virtual machine 2 also runs a Linux operating system with the infotainment cockpit system deployed thereon. For another example, virtual machine 1 runs a Linux operating system with the intelligent driving system deployed thereon, and virtual machine 2 runs an Android operating system with the infotainment cockpit system deployed thereon.

Furthermore, the hypervisor creates virtual SMMU 11 bound to physical SMMU 1 and virtual SMMU 12 bound to physical SMMU 2 in virtual machine 1, and creates virtual SMMU 21 bound to physical SMMU 1 and virtual SMMU 22 bound to physical SMMU 2 in virtual machine 2. The hypervisor allocates physical device 1, physical device 2, and physical device 3 to virtual machine 1. Since physical device 1 and physical device 2 are connected to physical SMMU 1 through hardware circuits, and physical device 3 is connected to physical SMMU 2 through hardware circuits, physical device 1 and physical device 2 establish an association relationship with virtual SMMU 11, and physical device 3 establishes an association relationship with virtual SMMU 12. Similarly, the hypervisor allocates physical device 4, physical device 5, and physical device 6 to virtual machine 2. Since physical device 4 is connected to physical SMMU 1 through hardware circuits, and physical device 5 and physical device 6 are connected to physical SMMU 2 through hardware circuits, physical device 4 establishes an association relationship with virtual SMMU 21, and physical device 5 and physical device 6 establish an association relationship with virtual SMMU 22.

FIG. 1B is a structural diagram of a virtual SMMU provided by an exemplary embodiment of the present disclosure. As shown in FIG. 1B, the virtual SMMU created by the hypervisor in a virtual machine can emulate all functions of the physical SMMU. Referring to FIG. 1B, the virtual SMMU includes at least a register module, a page table module, a command queue module, and an event queue module. The register module is configured to provide the virtual machine with an emulation function for configuring registers in the virtual SMMU. Based on a Stage-2 Page Fault mechanism, the hypervisor can capture an access request from the virtual machine to the registers of the virtual SMMU and provide an access response to the registers of the virtual SMMU to the virtual machine. Meanwhile, the hypervisor may also obtain configurations of the virtual SMMU by the virtual machine and implement control of the virtual SMMU by performing read and write operations on different registers in the register module of the virtual SMMU. For example, the hypervisor may obtain a stream table base address configured for the virtual SMMU by the virtual machine by performing a read operation on the SMMU_STRTAB_BASE register; obtain a start address of a command queue memory region by performing a read operation on the SMMU_CMDQ_BASE register; and control the enabling and disabling of the virtual SMMU by performing a write operation on the SMMU_CR0 register, thereby achieving emulation and simulation of virtualized registers in the virtual SMMU. The page table module is configured to provide the virtual machine with an emulation function for configuring page tables in the virtual SMMU. The virtual machine requests physical memory for page tables from a memory management subsystem and writes a start physical address corresponding to the physical memory (i.e., the start address of the page table memory region) into an SMMU page table base address register. The hypervisor intercepts and parses the configuration process of the SMMU page table base address register in the virtual SMMU by the virtual machine, and maps the start address of the page table memory region to its own address space to achieve access and management of the virtual SMMU page table. When the hypervisor captures a page table configuration operation of the virtual SMMU by the virtual machine, the hypervisor further completes a merged mapping between the virtual SMMU page table in the virtual SMMU and the physical SMMU page table in the physical SMMU, to achieve consistent address translation and access permission control. The command queue module is configured to provide the virtual machine with an emulation function for writing control commands into a command queue of the virtual SMMU. The hypervisor obtains the memory region of the command queue configured for the virtual SMMU by the virtual machine by performing a read operation on the register emulation module, and monitors write operations to the command queue of the virtual SMMU by the virtual machine. When the hypervisor captures the virtual machine writing a control command into the command queue of the virtual SMMU, the hypervisor reads the control command from the command queue of the virtual SMMU and writes it into the command queue of the physical SMMU according to a preset policy, achieving transparent forwarding of the control command. The event queue module is configured to provide the virtual machine with an emulation function for reading an event queue of the virtual SMMU. When the physical SMMU detects an exception event (e.g., an address translation error, a permission violation, etc.) and writes the exception event into the event queue of the physical SMMU, the hypervisor reads the exception event from the event queue of the physical SMMU and writes the exception event into the event queue of the virtual SMMU. Thereafter, the hypervisor notifies the virtual machine by injecting a virtual interrupt into the virtual machine, and the virtual machine executes a corresponding exception event handling procedure, thereby achieving the virtual machine's capability of perceiving and handling exception events of the virtual SMMU.

In the embodiments of the present disclosure, the hypervisor creates virtual SMMUs bound to the physical SMMU in the respective virtual machines, obtains the address translation configurations of the respective virtual SMMUs from the respective virtual machines, and performs an update operation on the address translation configuration of the physical SMMU based on the address translation configurations of the respective virtual SMMUs, thereby enabling multiple cockpit-driving systems to access and configure the physical SMMU, enabling dynamic reassignment of physical devices among the multiple cockpit-driving systems based on demand, and thereby improving the flexibility of physical device allocation among the multiple cockpit-driving systems.

### Exemplary method

FIG. 2 is a schematic flowchart of an SMMU management method provided by an exemplary embodiment of the present disclosure. As shown in FIG. 2, the SMMU management method may include the following steps:
Step 201: In response to the respective virtual machines performing configuration operations on the address translation configurations of the respective virtual SMMUs, obtaining the address translation configurations of the respective virtual SMMUs.

By way of example, after a virtual machine starts, the virtual machine may perform configuration operations on the address translation configuration of the virtual SMMU inside it. During this process, the hypervisor obtains the address translation configurations of the virtual SMMUs inside the respective virtual machines by performing read operations on the register module and page table module of the virtual SMMU. The address translation configuration of the virtual SMMU may include a stream identifier, a context descriptor, and a Stage-1 address translation rule corresponding to the physical device associated with the virtual SMMU. For example, referring to FIG. 1A, after virtual machine 1 starts, virtual machine 1 may perform configuration operations on the address translation configurations of virtual SMMU 11 and virtual SMMU 12 inside it. Similarly, after virtual machine 2 starts, virtual machine 2 may perform configuration operations on the address translation configurations of virtual SMMU 21 and virtual SMMU 22 inside it. Correspondingly, the hypervisor may obtain the address translation configurations of virtual SMMU 11, virtual SMMU 12, virtual SMMU 21, and virtual SMMU 22. The detailed process of the hypervisor obtaining the address translation configurations of the respective virtual SMMUs in response to the configuration operations performed by the respective virtual machines on the address translation configurations of the respective virtual SMMUs will be described in detail later and is not repeated here.

Step 202: Performing an update operation on the address translation configuration of the physical SMMU based on the address translation configurations of the respective virtual SMMUs.

By way of example, after the hypervisor obtains the address translation configurations of the respective virtual SMMUs, for multiple virtual SMMUs bound to the same physical SMMU, the hypervisor may perform an update operation on the address translation configuration of the same physical SMMU to which the multiple virtual SMMUs are bound based on the address translation configurations of the multiple virtual SMMUs. Subsequently, DMA requests from physical devices associated with the multiple virtual SMMUs may be forwarded by the multiple virtual SMMUs to the physical SMMU to which the multiple virtual SMMUs are bound, and the physical SMMU to which the multiple virtual SMMUs are bound further performs address translation on the DMA requests from the physical devices associated with the multiple virtual SMMUs. For example, referring to FIG. 1A, virtual SMMU 11 in virtual machine 1 and virtual SMMU 21 in virtual machine 2 are bound to the same physical SMMU 1. The hypervisor may perform an update operation on the address translation configuration of physical SMMU 1 based on the address translation configurations of virtual SMMU 11 and virtual SMMU 21. Subsequently, DMA requests from physical device 1 and physical device 2 may be forwarded to physical SMMU 1 through virtual SMMU 11, and physical SMMU 1 performs address translation on the DMA requests from physical device 1 and physical device 2. DMA requests from physical device 4 may be forwarded to physical SMMU 1 through virtual SMMU 21, and physical SMMU 1 performs address translation on the DMA request from physical device 4. Similarly, virtual SMMU 12 in virtual machine 1 and virtual SMMU 22 in virtual machine 2 are bound to the same physical SMMU 2. The hypervisor may perform an update operation on the address translation configuration of physical SMMU 2 based on the address translation configurations of virtual SMMU 12 and virtual SMMU 22. Subsequently, DMA requests from physical device 3 may be forwarded to physical SMMU 2 through virtual SMMU 12, and physical SMMU 2 performs address translation on the DMA request from physical device 3. DMA requests from physical device 5 and physical device 6 may be forwarded to physical SMMU 2 through virtual SMMU 22, and physical SMMU 2 performs address translation on the DMA requests from physical device 5 and physical device 6. The detailed process of the hypervisor performing an update operation on the address translation configuration of the physical SMMU based on the address translation configurations of the respective virtual SMMUs will be described in detail later and is not repeated here.

In the embodiments of the present disclosure, the hypervisor creates virtual SMMUs bound to the physical SMMU in the respective virtual machines, obtains the address translation configurations of the respective virtual SMMUs from the respective virtual machines, and performs an update operation on the address translation configuration of the physical SMMU based on the address translation configurations of the respective virtual SMMUs, thereby enabling multiple cockpit-driving systems to access and configure the physical SMMU, enabling dynamic reassignment of physical devices among the multiple cockpit-driving systems based on demand, and thereby improving the flexibility of physical device allocation among the multiple cockpit-driving systems.

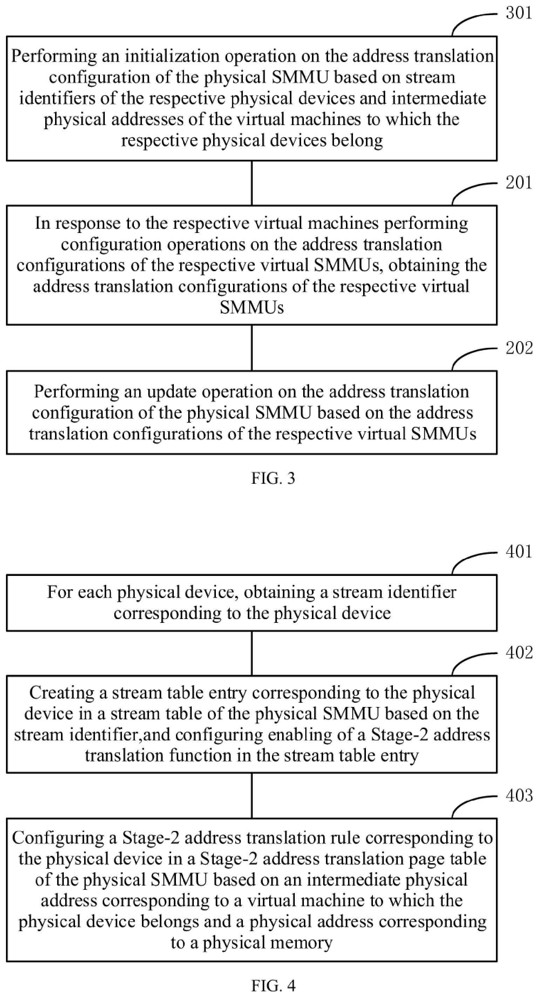

In some embodiments, as shown in FIG. 3, on the basis of the embodiment shown in FIG. 2 described above, before step 201, the SMMU management method may further include the following step:
Step 301: Performing an initialization operation on the address translation configuration of the physical SMMU based on stream identifiers of the respective physical devices and intermediate physical addresses of the virtual machines to which the respective physical devices belong.

By way of example, the physical SMMU in the cockpit-driving fusion chip is deployed at a virtualization abstraction layer, and the hypervisor is uniformly responsible for the initialization, configuration, and operation maintenance of the physical SMMU. After the cockpit-driving fusion chip is powered on and started, the hypervisor detects and identifies all available physical SMMUs in the cockpit-driving fusion chip. Then, for each physical SMMU, the hypervisor obtains the stream identifiers corresponding to the physical devices connected to the physical SMMU through hardware circuits. Then, for each physical device, based on the stream identifier corresponding to the physical device, a stream table entry corresponding to the physical device is created in the stream table of the physical SMMU, and enabling of a Stage-2 address translation function is configured in the stream table entry. Thereafter, the hypervisor configures a Stage-2 address translation rule corresponding to the physical device in the Stage-2 address translation page table of the physical SMMU based on the intermediate physical address corresponding to the virtual machine to which the physical device belongs and the physical address corresponding to the physical memory, thereby completing the initialization operation on the address translation configuration of the physical SMMU.

In the embodiments of the present disclosure, after the cockpit-driving fusion chip is powered on and started, the hypervisor performs the initialization operation on the address translation configuration of the physical SMMU, so that after the address translation configurations of the respective virtual SMMUs are subsequently merged by the physical devices, Combined Stage-1 and Stage-2 address translation can be provided for the physical devices, ensuring that accesses from the physical devices are accurately mapped to the physical memory.

In some embodiments, as shown in FIG. 4, on the basis of the embodiment shown in FIG. 3 described above, step 301 may include the following steps:
Step 401: For each physical device, obtaining a stream identifier corresponding to the physical device.

By way of example, after the cockpit-driving fusion chip is powered on and started, for each physical device, the hypervisor may obtain the stream identifier corresponding to the physical device. The stream identifier corresponding to the physical device is used to uniquely identify the physical device. To avoid stream identifier conflicts when a physical device is reassigned among different virtual machines, the stream identifier corresponding to the physical device is globally unique in the embodiments of the present disclosure. For example, referring to FIG. 1A, the hypervisor obtains the stream identifier of physical device 1 as stream_id_1.

Step 402: Creating a stream table entry corresponding to the physical device in a stream table of the physical SMMU based on the stream identifier, and configuring enabling of a Stage-2 address translation function in the stream table entry.

By way of example, for each physical device, after the hypervisor obtains the stream identifier corresponding to the physical device, the hypervisor may further perform a read operation on a stream table base address register of the physical SMMU to which the physical device is bound, to obtain a start address corresponding to the stream table of the physical SMMU. Then, the hypervisor may perform a write operation on the stream table of the physical SMMU based on the start address corresponding to the stream table to create a Stream Table Entry (STE) indexed by the stream identifier corresponding to the physical device in the stream table of the physical SMMU, i.e., to create the stream table entry corresponding to the physical device. The stream table entry corresponding to the physical device is used to configure the address translation rules and access control policies of the physical device. Thereafter, the hypervisor may further set the enable flag bit corresponding to the Stage-2 address translation function to 1 in the stream table entry corresponding to the physical device, to enable the Stage-2 address translation function (Stage-2 Translation), and configure the base address of the Stage-2 address translation page table in the stream table entry corresponding to the physical device. For example, referring to FIG. 1A, the hypervisor creates a stream table entry STE1 indexed by the stream identifier stream_id_1 corresponding to physical device 1 in the stream table of the physical SMMU, and enables the Stage-2 address translation function in the stream table entry STE1.

Step 403: Configuring a Stage-2 address translation rule corresponding to the physical device in a Stage-2 address translation page table of the physical SMMU based on an intermediate physical address corresponding to a virtual machine to which the physical device belongs and a physical address corresponding to a physical memory.

By way of example, after the hypervisor configures enabling of the Stage-2 address translation function in the stream table entry corresponding to the physical device, the hypervisor may further perform a write operation on the Stage-2 address translation page table of the physical SMMU based on the base address of the Stage-2 address translation page table configured in the stream table entry corresponding to the physical device, to configure the Stage-2 address translation rule corresponding to the physical device based on the Intermediate Physical Address (IPA) corresponding to the virtual machine to which the physical device belongs and the Physical Address (PA) corresponding to the physical memory. The Stage-2 address translation rule corresponding to the physical device includes the mapping relationship between the Intermediate Physical Address (IPA) corresponding to the virtual machine to which the physical device belongs and the Physical Address (PA) corresponding to the physical memory. The Intermediate Physical Address (IPA) corresponding to the virtual machine is a virtual physical address of the physical memory allocated by the hypervisor for the virtual machine in the physical memory, and the Physical Address (PA) corresponding to the physical memory is a real physical address of the physical memory allocated by the hypervisor for the virtual machine in the physical memory.

In the embodiments of the present disclosure, for each physical device, the hypervisor obtains the stream identifier corresponding to the physical device, creates the stream table entry corresponding to the physical device in the stream table of the physical SMMU based on the stream identifier, and configures enabling of the Stage-2 address translation function in the stream table entry. Then, the hypervisor configures the Stage-2 address translation rule corresponding to the physical device in the Stage-2 address translation page table of the physical SMMU based on the intermediate physical address corresponding to the virtual machine to which the physical device belongs and the physical address corresponding to the physical memory. In this way, the hypervisor completes the initialization operation on the address translation configuration of the physical SMMU, so that after the address translation configurations of the respective virtual SMMUs are subsequently merged by the physical devices, Combined Stage-1 and Stage-2 address translation can be provided for the physical devices, ensuring that accesses from the physical devices are accurately mapped to the physical memory.

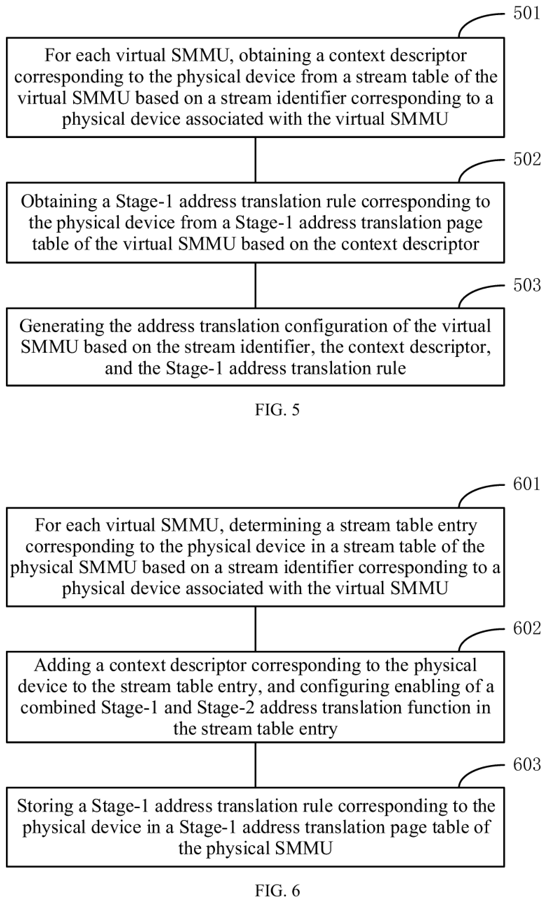

In some embodiments, as shown in FIG. 5, on the basis of the embodiment shown in FIG. 2 described above, step 201 may include the following steps:
Step 501: For each virtual SMMU, obtaining a context descriptor corresponding to the physical device from a stream table of the virtual SMMU based on a stream identifier corresponding to a physical device associated with the virtual SMMU.

By way of example, for each virtual SMMU, the hypervisor may obtain the stream identifier corresponding to the physical device associated with the virtual SMMU. Then, the hypervisor may further perform a read operation on a stream table base address register of the virtual SMMU to obtain a start address corresponding to the stream table of the virtual SMMU. Then, the hypervisor may perform a read operation on the stream table of the virtual SMMU based on the start address corresponding to the stream table, to query a stream table entry indexed by the stream identifier corresponding to the physical device in the stream table of the virtual SMMU (i.e., the stream table entry corresponding to the physical device), and obtain the context descriptor corresponding to the physical device from the stream table entry corresponding to the physical device.

Step 502: Obtaining a Stage-1 address translation rule corresponding to the physical device from a Stage-1 address translation page table of the virtual SMMU based on the context descriptor.

By way of example, the context descriptor corresponding to the physical device stores a base address of the Stage-1 address translation page table of the virtual SMMU. The hypervisor performs a read operation on the Stage-1 address translation page table of the virtual SMMU based on the base address of the Stage-1 address translation page table to obtain the Stage-1 address translation rule corresponding to the physical device from the Stage-1 address translation page table of the virtual SMMU based on the stream identifier corresponding to the physical device. The Stage-1 address translation rule corresponding to the physical device includes the mapping relationship between a Virtual Address (VA) corresponding to the physical device and an Intermediate Physical Address (IPA).

Step 503: Generating the address translation configuration of the virtual SMMU based on the stream identifier, the context descriptor, and the Stage-1 address translation rule.

By way of example, after the hypervisor obtains the stream identifier, the context descriptor, and the Stage-1 address translation rule corresponding to the physical device, the hypervisor may encapsulate the above information to generate the address translation configuration of the virtual SMMU.

In the embodiments of the present disclosure, for each virtual SMMU, the hypervisor obtains the stream identifier, the context descriptor, and the Stage-1 address translation rule of the physical device associated with the virtual SMMU to obtain the address translation configuration of the virtual SMMU, so that the hypervisor can subsequently perform an update operation on the address translation configuration of the physical SMMU to which the virtual SMMU is bound based on the address translation configuration of the virtual SMMU.

In some embodiments, as shown in FIG. 6, on the basis of the embodiment shown in FIG. 2 described above, step 202 may include the following steps:
Step 601: For each virtual SMMU, determining a stream table entry corresponding to the physical device in a stream table of the physical SMMU based on a stream identifier corresponding to a physical device associated with the virtual SMMU.

By way of example, for each virtual SMMU, after the hypervisor obtains the address translation configuration of the virtual SMMU, the hypervisor may perform a read operation on a stream table base address register of the physical SMMU to which the virtual SMMU is bound to obtain a start address corresponding to the stream table of the physical SMMU. Then, the hypervisor may perform a read operation on the stream table of the physical SMMU based on the start address corresponding to the stream table, to query a stream table entry indexed by the stream identifier corresponding to the physical device in the stream table of the physical SMMU (i.e., the stream table entry corresponding to the physical device) based on the stream identifier corresponding to the physical device in the address translation configuration.

Step 602: Adding a context descriptor corresponding to the physical device to the stream table entry, and configuring enabling of a combined Stage-1 and Stage-2 address translation function in the stream table entry.

By way of example, after the hypervisor obtains the stream table entry corresponding to the physical device stored in the stream table of the physical SMMU, the hypervisor may add the context descriptor corresponding to the physical device in the address translation configuration to the stream table entry corresponding to the physical device, and further set the enable flag bit corresponding to the Stage-1 address translation function to 1 in the stream table entry corresponding to the physical device to enable the Stage-1 address translation function (Stage-1 Translation). Since the hypervisor has already enabled the Stage-2 address translation function in the stream table entry corresponding to the physical device during the initialization operation of the physical SMMU, the stream table entry corresponding to the physical device has the combined Stage-1 and Stage-2 address translation function (Stage-1 & Stage-2 Translation) enabled.

Step 603: Storing a Stage-1 address translation rule corresponding to the physical device in a Stage-1 address translation page table of the physical SMMU.

By way of example, after the hypervisor enables the combined Stage-1 and Stage-2 address translation function in the stream table entry corresponding to the physical device in the physical SMMU, the hypervisor may further store the Stage-1 address translation rule corresponding to the physical device in the address translation configuration in the Stage-1 address translation page table of the physical SMMU. Subsequently, after the physical SMMU receives a DMA request sent by the physical device, the physical SMMU may convert a Virtual Address (VA) corresponding to the physical device into an Intermediate Physical Address (IPA) through the Stage-1 address translation page table, and further convert the Intermediate Physical Address (IPA) corresponding to the physical device into a Physical Address (PA) through the Stage-2 address translation page table, thereby achieving combined Stage-1 and Stage-2 address translation for the physical device.

In the embodiments of the present disclosure, for each virtual SMMU, the hypervisor determines the stream table entry corresponding to the physical device in the stream table of the physical SMMU based on the stream identifier corresponding to the physical device associated with the virtual SMMU. Then, the hypervisor adds the context descriptor corresponding to the physical device to the stream table entry, configures enabling of the combined Stage-1 and Stage-2 address translation function in the stream table entry, and stores the Stage-1 address translation rule corresponding to the physical device in the Stage-1 address translation page table of the physical SMMU. In this way, the hypervisor performs an update operation on the address translation configuration of the physical SMMU to which the virtual SMMU is bound based on the address translation configuration of the virtual SMMU, thereby merging the configuration of the virtual SMMU by the virtual machine into the physical SMMU, and thus enabling multiple cockpit-driving systems to access and configure the physical SMMU.

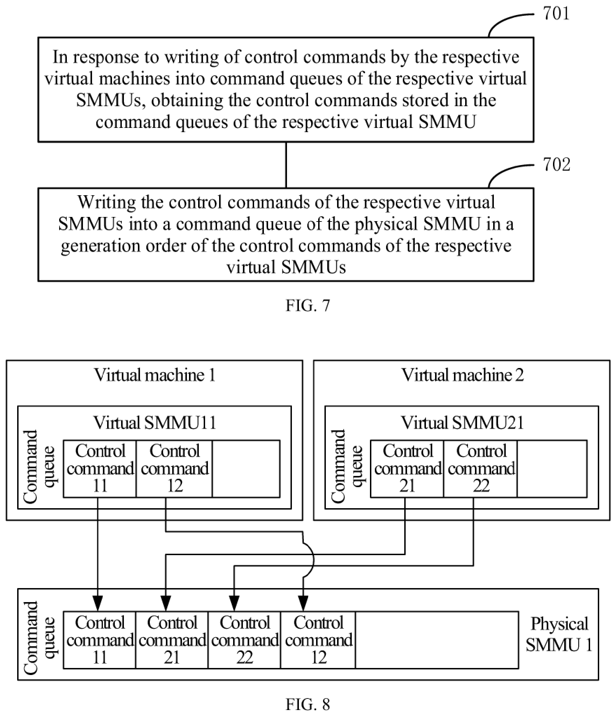

In some embodiments, as shown in FIG. 7, on the basis of the embodiment shown in FIG. 2 described above, the SMMU management method may further include the following steps:
Step 701: In response to writing of control commands by the respective virtual machines into command queues of the respective virtual SMMUs, obtaining the control commands stored in the command queues of the respective virtual SMMUs.

By way of example, for each virtual machine, when the virtual machine requires the virtual SMMU inside it to execute a certain control command, the virtual machine may write the control command into the command queue of the virtual SMMU, and further perform a write operation on a command producer register (SMMU_CMDQ_PROD register) of the virtual SMMU to update the number of written control commands, thereby notifying the virtual SMMU that the command queue has been updated. The control commands written by the virtual machine into the command queue of the virtual SMMU are commands for the virtual machine to control the virtual SMMU to perform address translation, cache management, and permission management, such as a Translation Lookaside Buffer (TLB) invalidation command, a configuration cache invalidation command, etc. Since the physical SMMU has merged the address translation configurations of the virtual SMMUs bound to it, when the virtual machine controls the virtual SMMU to update the address translation configuration through a control command, the physical SMMU also needs to execute the control command to update the address translation configuration of the virtual SMMU stored therein. Based on this, after the hypervisor captures the virtual machine writing a control command into the command queue of the virtual SMMU, the hypervisor may perform a read operation on the command queue of the virtual SMMU to obtain the control command stored in the command queue of the virtual SMMU. For example, referring to FIG. 8, virtual machine 1 writes control command 11 and control command 12 into the command queue of virtual SMMU 11 inside it. Virtual machine 2 writes control command 21 and control command 22 into the command queue of virtual SMMU 21 inside it. Correspondingly, after the hypervisor captures the virtual machine 1 writing control commands into the command queue of virtual SMMU 11 and the virtual machine 2 writing control commands into the command queue of virtual SMMU 21, the hypervisor may perform read operations on the command queues of virtual SMMU 11 and virtual SMMU 21 to obtain control command 11, control command 12, control command 21, and control command 22 stored in the command queues of virtual SMMU 11 and virtual SMMU 21.

Step 702: Writing the control commands of the respective virtual SMMUs into a command queue of the physical SMMU in a generation order of the control commands of the respective virtual SMMUs.

By way of example, when multiple virtual machines write control commands into the command queues of the virtual SMMUs inside them, for each physical SMMU, the hypervisor may obtain the control commands stored in the command queues of different virtual SMMUs bound to the physical SMMU. To ensure that the control commands from different virtual SMMUs can be sequentially processed by the physical SMMU, the hypervisor may determine the generation order of the control commands of the respective virtual SMMUs based on generation timestamps of the control commands of the respective virtual SMMUs. A smaller generation timestamp of a control command indicates an earlier generation order, and a larger generation timestamp of a control command indicates a later generation order. Then, the hypervisor may write the control commands of the respective virtual SMMUs into the command queue of the physical SMMU in the generation order of the control commands of the respective virtual SMMUs. Subsequently, the physical SMMU may sequentially execute the control commands in the generation order of the respective control commands to update the address translation configurations of the respective virtual SMMUs stored therein. For example, referring to FIG. 8, virtual SMMU 11 in virtual machine 1 and virtual SMMU 21 in virtual machine 2 are bound to physical SMMU 1. The generation order of the control commands of virtual SMMU 11 and virtual SMMU 21 is: control command 11 > control command 21 > control command 22 > control command 12. The hypervisor sequentially writes control command 11, control command 21, control command 22, and control command 12 into the command queue of the physical SMMU in the above generation order of the control commands.

It should be noted that those skilled in the art may also write the control commands of the respective virtual SMMUs into the command queue of the physical SMMU according to a read order, a priority order, etc. of the control commands. The embodiments of the present disclosure are not limited thereto.

In the embodiments of the present disclosure, in response to writing of control commands by the respective virtual machines into command queues of the respective virtual SMMUs, the hypervisor obtains the control commands stored in the command queues of the respective virtual SMMUs. Then, the hypervisor writes the control commands of the respective virtual SMMUs into the command queue of the physical SMMU in the generation order of the control commands of the respective virtual SMMUs. In this way, when the virtual machine updates the address translation configuration of the virtual SMMU inside it through control commands, the physical SMMU can synchronously update the address translation configuration of the virtual SMMU stored therein, to ensure synchronization of the address translation configurations. Meanwhile, the hypervisor writes the control commands of the respective virtual SMMUs into the command queue of the physical SMMU in the generation order of the control commands of the respective virtual SMMUs, thereby ensuring that the physical SMMU can execute the control commands in the generation order of the control commands of the respective virtual SMMUs.

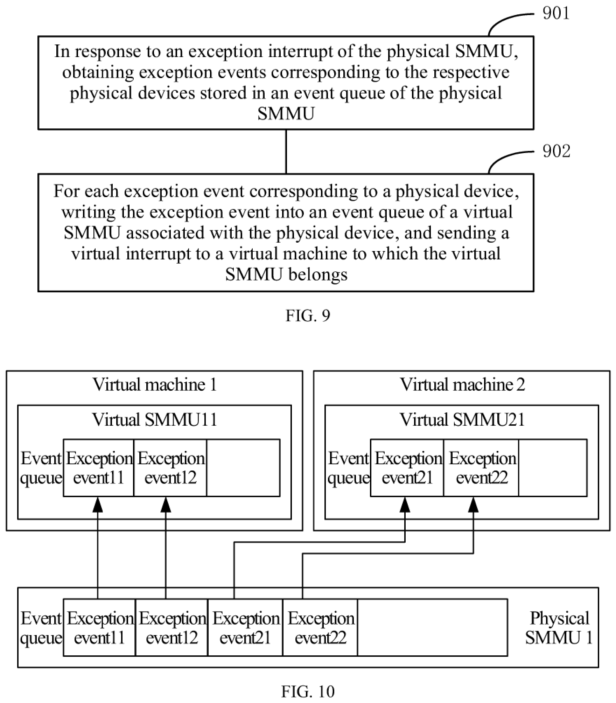

In some embodiments, as shown in FIG. 9, on the basis of the embodiment shown in FIG. 2 described above, the SMMU management method may further include the following steps:
Step 901: In response to an exception interrupt of the physical SMMU, obtaining exception events corresponding to the respective physical devices stored in an event queue of the physical SMMU.

By way of example, when the physical SMMU encounters an exception event corresponding to a physical device (such as an address translation failure event, a permission error event, etc.), the physical SMMU may write the exception event corresponding to the physical device into the event queue of the physical SMMU and send an exception interrupt to the hypervisor to notify the hypervisor that the exception events in the event queue of the physical SMMU have been updated. Since the virtual machine cannot directly access the event queue of the physical SMMU to obtain the exception events corresponding to the respective physical devices stored in the event queue of the physical SMMU, in response to the exception interrupt sent by the physical SMMU, the hypervisor may perform a read operation on the event queue of the physical SMMU to obtain the exception events corresponding to the respective physical devices stored in the event queue of the physical SMMU. For example, referring to FIG. 1A and FIG. 10, the event queue of physical SMMU 1 stores exception event 11 corresponding to physical device 1, exception event 12 corresponding to physical device 2, exception event 21 corresponding to physical device 4, and exception event 22 corresponding to physical device 4. The hypervisor, in response to the exception interrupt sent by the physical SMMU, may perform a read operation on the event queue of the physical SMMU to obtain exception event 11 corresponding to physical device 1, exception event 12 corresponding to physical device 2, exception event 21 corresponding to physical device 4, and exception event 22 corresponding to physical device 4 stored in the event queue of the physical SMMU.

Step 902: For each exception event corresponding to a physical device, writing the exception event into an event queue of a virtual SMMU associated with the physical device, and sending a virtual interrupt to a virtual machine to which the virtual SMMU belongs. The virtual interrupt is used to instruct the virtual machine to process the exception event corresponding to the physical device stored in the event queue of the virtual SMMU.

By way of example, since different physical devices connected to the physical SMMU through hardware circuits may be allocated to different virtual machines, different physical devices may be associated with virtual SMMUs created in different virtual machines and bound to the physical SMMU. To ensure that the exception event corresponding to the physical device can be accurately written into the event queue of the virtual SMMU associated with the physical device, after the hypervisor obtains the exception events corresponding to the respective physical devices stored in the event queue of the physical SMMU, for each exception event corresponding to a physical device, the hypervisor may query the virtual SMMU associated with the physical device from the association relationships between the physical devices and the virtual SMMUs. Then, the hypervisor may write the exception event corresponding to the physical device into the event queue of the virtual SMMU associated with the physical device. Thereafter, the hypervisor may send a virtual interrupt to the virtual machine to which the virtual SMMU belongs. The virtual interrupt is used to instruct the virtual machine to process the exception event corresponding to the physical device stored in the event queue of the virtual SMMU. In response to receiving the virtual interrupt sent by the hypervisor, the virtual machine may obtain the exception event corresponding to the physical device from the event queue of the virtual SMMU, and parse and process the exception event corresponding to the physical device. In response to completing the parsing and processing of the exception event corresponding to the physical device, the virtual machine may further perform a write operation on an event queue consumer register (SMMU_EVENTQ_CONS) of the virtual SMMU to notify the virtual SMMU that the parsing and processing of the exception event corresponding to the physical device have been completed. Correspondingly, the hypervisor may determine that the virtual machine has completed the parsing and processing of the exception event corresponding to the physical device by performing a read operation on the event queue consumer register of the virtual SMMU. For example, referring to FIG. 1A and FIG. 10, physical device 1 and physical device 2 are associated with virtual SMMU 11, and physical device 4 is associated with virtual SMMU 21. Both virtual SMMU 11 and virtual SMMU 21 are bound to physical SMMU 1. Therefore, after the hypervisor obtains exception event 11 corresponding to physical device 1, exception event 12 corresponding to physical device 2, exception event 21 corresponding to physical device 4, and exception event 22 corresponding to physical device 4 stored in the event queue of the physical SMMU, the hypervisor may write exception event 11 corresponding to physical device 1 and exception event 12 corresponding to physical device 2 into the event queue of virtual SMMU 11, and write exception event 21 and exception event 22 corresponding to physical device 4 into the event queue of virtual SMMU 21. Subsequently, the hypervisor sends a virtual interrupt to virtual machine 1 to notify virtual machine 1 to read and execute exception event 11 corresponding to physical device 1 and exception event 12 corresponding to physical device 2 stored in the event queue of virtual SMMU 11. Similarly, the hypervisor sends a virtual interrupt to virtual machine 2 to notify virtual machine 2 to read and execute exception event 21 and exception event 22 corresponding to physical device 4 stored in the event queue of virtual SMMU 21.

In the embodiments of the present disclosure, in response to the exception interrupt of the physical SMMU, the hypervisor obtains the exception events corresponding to the respective physical devices stored in the event queue of the physical SMMU. Then, for each exception event corresponding to a physical device, the exception event is written into the event queue of the virtual SMMU associated with the physical device, and a virtual interrupt is sent to the virtual machine to which the virtual SMMU belongs, to notify the virtual machine to process the exception event corresponding to the physical device stored in the event queue of the virtual SMMU. In this way, the virtual machine can achieve parsing and processing of the exception event corresponding to the physical device.

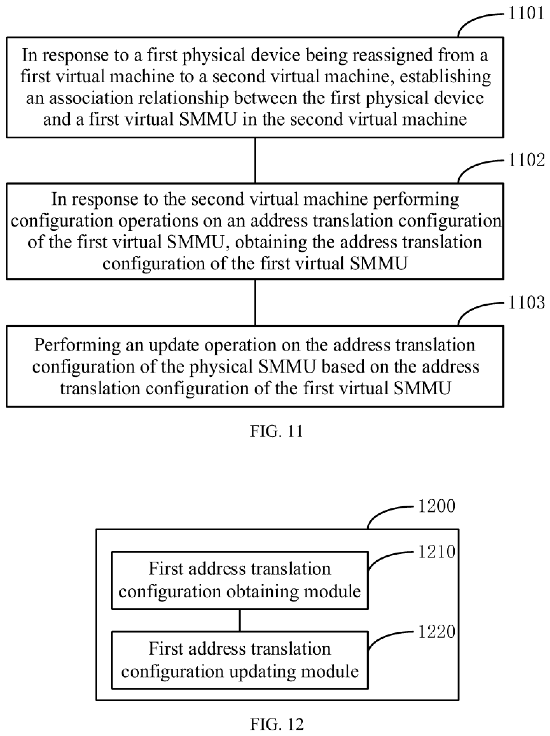

In some embodiments, as shown in FIG. 11, on the basis of the embodiment shown in FIG. 2 described above, the SMMU management method may further include the following steps:
Step 1101: In response to a first physical device being reassigned from a first virtual machine to a second virtual machine, establishing an association relationship between the first physical device and a first virtual SMMU in the second virtual machine.

By way of example, when, in order to adapt to changes in functional requirements, the hypervisor reassigns a first physical device in the cockpit-driving fusion chip from a first virtual machine to a second virtual machine, the hypervisor, in response to the first physical device being reassigned from the first virtual machine to the second virtual machine, may further establish an association relationship between the first physical device and a first virtual SMMU in the second virtual machine. The first virtual SMMU is a virtual SMMU created by the hypervisor in the second virtual machine and bound to the physical SMMU to which the first physical device is connected through hardware circuits.

Step 1102: In response to the second virtual machine performing configuration operations on an address translation configuration of the first virtual SMMU, obtaining the address translation configuration of the first virtual SMMU.

By way of example, in response to the configuration operation performed by the second virtual machine on the address translation configuration of the first virtual SMMU, the hypervisor obtains the address translation configuration of the first virtual SMMU. The process of the hypervisor obtaining the address translation configuration of the first virtual SMMU is similar to the processes of step 201 and steps 401 to 403, and is not repeated here.

Step 1103: Performing an update operation on the address translation configuration of the physical SMMU based on the address translation configuration of the first virtual SMMU.

By way of example, after the hypervisor obtains the address translation configuration of the first virtual SMMU, the hypervisor may perform an update operation on the address translation configuration of the physical SMMU based on the address translation configuration of the first virtual SMMU. The process of the hypervisor performing an update operation on the address translation configuration of the physical SMMU based on the address translation configuration of the first virtual SMMU is similar to the processes of step 202 and steps 501 to 503, and is not repeated here.

In the embodiments of the present disclosure, when the first physical device is reassigned from the first virtual machine to the second virtual machine, the hypervisor establishes an association relationship between the first physical device and the first virtual SMMU in the second virtual machine. Subsequently, the hypervisor obtains the address translation configuration of the first virtual SMMU in response to the configuration operation performed by the second virtual machine on the address translation configuration of the first virtual SMMU, and performs an update operation on the address translation configuration of the physical SMMU based on the address translation configuration of the first virtual SMMU. In this way, after the physical device is reassigned, the hypervisor may update the address translation configuration of the physical SMMU based on the address translation configuration of the virtual SMMU after reassignment, thereby enabling multiple cockpit-driving systems to access and configure the physical SMMU, and thereby improving the flexibility of physical device allocation among the multiple cockpit-driving systems.

### Exemplary apparatus

FIG. 12 is a schematic structural diagram of an SMMU management apparatus provided by an exemplary embodiment of the present disclosure. As shown in FIG. 12, the SMMU management apparatus 1200 is applied to an SMMU management system. The SMMU management system includes a physical SMMU and virtual SMMUs created in virtual machines and bound to the physical SMMU. The virtual SMMU in each of the virtual machines is associated with a physical device that is allocated to the respective virtual machine and connected to the physical SMMU. The apparatus includes: a first address translation configuration obtaining module 1210 and a first address translation configuration updating module 1220.

The first address translation configuration obtaining module 1210 is configured to, in response to the respective virtual machines performing configuration operations on the address translation configurations of the respective virtual SMMUs, obtain the address translation configurations of the respective virtual SMMUs.

The first address translation configuration updating module 1220 is configured to perform an update operation on the address translation configuration of the physical SMMU based on the address translation configurations of the respective virtual SMMUs.

In some embodiments, the apparatus 1200 further includes: an address translation initialization module configured to perform an initialization operation on the address translation configuration of the physical SMMU based on stream identifiers of the respective physical devices and intermediate physical addresses of the virtual machines to which the respective physical devices belong.

In some embodiments, the address translation initialization module includes: a stream identifier obtaining unit configured to, for each physical device, obtain a stream identifier corresponding to the physical device;
a first address translation configuration unit configured to create a stream table entry corresponding to the physical device in a stream table of the physical SMMU based on the stream identifier, and configure enabling of a Stage-2 address translation function in the stream table entry; and
an address translation page table creation unit configured to configure a Stage-2 address translation rule corresponding to the physical device in a Stage-2 address translation page table of the physical SMMU based on an intermediate physical address corresponding to a virtual machine to which the physical device belongs and a physical address corresponding to a physical memory.

In some embodiments, the first address translation configuration obtaining module 1210 includes:
a context descriptor obtaining unit configured to, for each virtual SMMU, obtain a context descriptor corresponding to the physical device from a stream table of the virtual SMMU based on a stream identifier corresponding to a physical device associated with the virtual SMMU;
an address translation page table obtaining unit configured to obtain a Stage-1 address translation rule corresponding to the physical device from a Stage-1 address translation page table of the virtual SMMU based on the context descriptor; and
an address translation configuration generation unit configured to generate the address translation configuration of the virtual SMMU based on the stream identifier, the context descriptor, and the Stage-1 address translation rule.

In some embodiments, the first address translation configuration updating module 1220 includes: a stream table entry determination unit configured to, for each virtual SMMU, determine a stream table entry corresponding to the physical device in a stream table of the physical SMMU based on a stream identifier corresponding to a physical device associated with the virtual SMMU;
a second address translation configuration unit configured to add a context descriptor corresponding to the physical device to the stream table entry, and configure enabling of a combined Stage-1 and Stage-2 address translation function in the stream table entry; and
an address translation page table storage unit configured to store a Stage-1 address translation rule corresponding to the physical device in a Stage-1 address translation page table of the physical SMMU.

In some embodiments, the apparatus 1200 further includes:
a control command obtaining module configured to, in response to writing of control commands by the respective virtual machines into command queues of the respective virtual SMMUs, obtain the control commands stored in the command queues of the respective virtual SMMUs; and
a control command writing module configured to write the control commands of the respective virtual SMMUs into a command queue of the physical SMMU in a generation order of the control commands of the respective virtual SMMUs.

In some embodiments, the apparatus 1200 further includes:
an exception event obtaining module configured to, in response to an exception interrupt of the physical SMMU, obtain exception events corresponding to the respective physical devices stored in an event queue of the physical SMMU; and
an exception event writing module configured to, for each exception event corresponding to a physical device, write the exception event into an event queue of a virtual SMMU associated with the physical device, and send a virtual interrupt to a virtual machine to which the virtual SMMU belongs; wherein the virtual interrupt is used to instruct the virtual machine to process the exception event corresponding to the physical device stored in the event queue of the virtual SMMU.

In some embodiments, the apparatus 1200 further includes:
a physical device reassignment module configured to, in response to a first physical device being reassigned from a first virtual machine to a second virtual machine, establish an association relationship between the first physical device and a first virtual SMMU in the second virtual machine;
a second address translation configuration obtaining module configured to, in response to the second virtual machine performing configuration operations on an address translation configuration of the first virtual SMMU, obtain the address translation configuration of the first virtual SMMU; and
a second address translation configuration updating module configured to, based on the address translation configuration of the first virtual SMMU, perform an update operation on the address translation configuration of the physical SMMU.

The beneficial technical effects of the exemplary embodiment of the present apparatus may refer to the corresponding beneficial technical effects in the above exemplary method section, which are not repeated here.

### Exemplary electronic device

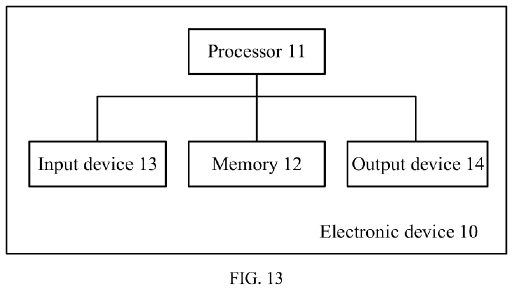

FIG. 13 is a diagram of a structure of an electronic device according to an embodiment of this disclosure. The electronic device includes at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the SMMU management method according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard or a mouse.

The output device 14 may output various information to the outside, and may include, for example, a display, a speaker, a printer, a communication network, and a remote output device connected to the communication network.

Certainly, for simplicity, FIG. 13 shows only some of components in the electronic device 10 that are related to this disclosure, and components such as a bus and an input/output interface are omitted. In addition, according to specific application situations, the electronic device 10 may further include any other appropriate components.

Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the SMMU management method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the SMMU management method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for the embodiments of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A system memory management unit, SMMU, management method, applied to an SMMU management system, wherein the SMMU management system comprises a physical SMMU and virtual SMMUs created in virtual machines and bound to the physical SMMU, the virtual SMMU in each of the virtual machines being associated with a physical device that is allocated to the respective virtual machine and connected to the physical SMMU, and the method comprises:
in response to the respective virtual machines performing configuration operations on the address translation configurations of the respective virtual SMMUs, obtaining (201) the address translation configurations of the respective virtual SMMUs; and
performing (202) an update operation on the address translation configuration of the physical SMMU based on the address translation configurations of the respective virtual SMMUs.

2. The method according to claim 1, wherein before the obtaining (201) the address translation configurations of the respective virtual SMMUs in response to configuration operations performed by the respective virtual machines on address translation configurations of the respective virtual SMMUs, the method further comprises:
performing (301) an initialization operation on the address translation configuration of the physical SMMU based on stream identifiers of the respective physical devices and intermediate physical addresses of the virtual machines to which the respective physical devices belong.

3. The method according to claim 2, wherein the performing (301) an initialization operation on the address translation configuration of the physical SMMU based on stream identifiers of the respective physical devices and intermediate physical addresses of the virtual machines to which the respective physical devices belong comprises:
for each physical device, obtaining (401) a stream identifier corresponding to the physical device;
creating (402) a stream table entry corresponding to the physical device in a stream table of the physical SMMU based on the stream identifier, and configuring enabling of a Stage-2 address translation function in the stream table entry; and
configuring (403) a Stage-2 address translation rule corresponding to the physical device in a Stage-2 address translation page table of the physical SMMU, based on an intermediate physical address corresponding to a virtual machine to which the physical device belongs and a physical address corresponding to a physical memory.

4. The method according to claim 1, wherein the obtaining (201) the address translation configurations of the respective virtual SMMUs comprises:
for each virtual SMMU, obtaining (501) a context descriptor corresponding to the physical device from a stream table of the virtual SMMU, based on a stream identifier corresponding to a physical device associated with the virtual SMMU;
obtaining (502) a Stage-1 address translation rule corresponding to the physical device from a Stage-1 address translation page table of the virtual SMMU based on the context descriptor; and
generating (503) the address translation configuration of the virtual SMMU, based on the stream identifier, the context descriptor, and the Stage-1 address translation rule.

5. The method according to claim 4, wherein the performing (202) an update operation on the address translation configuration of the physical SMMU based on the address translation configurations of the respective virtual SMMUs comprises:
for each virtual SMMU, determining (601) a stream table entry corresponding to the physical device in a stream table of the physical SMMU, based on a stream identifier corresponding to a physical device associated with the virtual SMMU;
adding (602) a context descriptor corresponding to the physical device to the stream table entry, and configuring enabling of a combined Stage-1 and Stage-2 address translation function in the stream table entry; and
storing (603) a Stage-1 address translation rule corresponding to the physical device in a Stage-1 address translation page table of the physical SMMU.

6. The method according to claim 1, further comprising:
in response to writing of control commands by the respective virtual machines into command queues of the respective virtual SMMUs, obtaining (701) the control commands stored in the command queues of the respective virtual SMMUs; and
writing (702) the control commands of the respective virtual SMMUs into a command queue of the physical SMMU in a generation order of the control commands of the respective virtual SMMUs.

7. The method according to claim 1, further comprising:
in response to an exception interrupt of the physical SMMU, obtaining (901) exception events corresponding to the respective physical devices stored in an event queue of the physical SMMU; and
for each exception event corresponding to a physical device, writing (902) the exception event into an event queue of a virtual SMMU associated with the physical device, and sending a virtual interrupt to a virtual machine to which the virtual SMMU belongs; wherein the virtual interrupt is used to instruct the virtual machine to process the exception event corresponding to the physical device stored in the event queue of the virtual SMMU.

8. The method according to any one of claims 1 to 7, further comprising:
in response to a first physical device being reassigned from a first virtual machine to a second virtual machine, establishing (1101) an association relationship between the first physical device and a first virtual SMMU in the second virtual machine;
in response to the second virtual machine performing configuration operations on an address translation configuration of the first virtual SMMU, obtaining (1102) the address translation configuration of the first virtual SMMU; and
performing (1103) an update operation on the address translation configuration of the physical SMMU based on the address translation configuration of the first virtual SMMU.

9. A system memory management unit, SMMU, management apparatus, applied to an SMMU management system, wherein the SMMU management system comprises a physical SMMU and virtual SMMUs created in virtual machines and bound to the physical SMMU, the virtual SMMU in each of the virtual machines being associated with a physical device that is allocated to the respective virtual machine and connected to the physical SMMU, and the apparatus comprises:
a first address translation configuration obtaining module (1210), configured to, in response to configuration operations performed by the respective virtual machines on address translation configurations of the respective virtual SMMUs, obtain the address translation configurations of the respective virtual SMMUs; and
a first address translation configuration updating module (1220), configured to perform an update operation on the address translation configuration of the physical SMMU based on the address translation configurations of the respective virtual SMMUs.

10. The system memory management unit, SMMU, management apparatus according to claim 9, further comprises:
an address translation initialization module, configured to perform an initialization operation on the address translation configuration of the physical SMMU based on stream identifiers of the respective physical devices and intermediate physical addresses of the virtual machines to which the respective physical devices belong.

11. The system memory management unit, SMMU, management apparatus according to claim 10, wherein the address translation initialization module comprises:
a stream identifier obtaining unit, configured to, for each physical device, obtain a stream identifier corresponding to the physical device;
a first address translation configuration unit, configured to create a stream table entry corresponding to the physical device in a stream table of the physical SMMU based on the stream identifier, and configure enabling of a Stage-2 address translation function in the stream table entry; and
an address translation page table creation unit, configured to configure a Stage-2 address translation rule corresponding to the physical device in a Stage-2 address translation page table of the physical SMMU based on an intermediate physical address corresponding to a virtual machine to which the physical device belongs and a physical address corresponding to a physical memory.

12. The system memory management unit, SMMU, management apparatus according to claim 9, wherein the first address translation configuration obtaining module (1210) comprises:
a context descriptor obtaining unit, configured to, for each virtual SMMU, obtain a context descriptor corresponding to the physical device from a stream table of the virtual SMMU based on a stream identifier corresponding to a physical device associated with the virtual SMMU;
an address translation page table obtaining unit, configured to obtain a Stage-1 address translation rule corresponding to the physical device from a Stage-1 address translation page table of the virtual SMMU based on the context descriptor; and
an address translation configuration generation unit, configured to generate the address translation configuration of the virtual SMMU based on the stream identifier, the context descriptor, and the Stage-1 address translation rule.

13. The system memory management unit, SMMU, management apparatus according to claim 12, wherein the first address translation configuration updating module (1220) comprises:
a stream table entry determination unit, configured to, for each virtual SMMU, determine a stream table entry corresponding to the physical device in a stream table of the physical SMMU based on a stream identifier corresponding to a physical device associated with the virtual SMMU;
a second address translation configuration unit, configured to add a context descriptor corresponding to the physical device to the stream table entry, and configure enabling of a combined Stage-1 and Stage-2 address translation function in the stream table entry; and
an address translation page table storage unit configured to store a Stage-1 address translation rule corresponding to the physical device in a Stage-1 address translation page table of the physical SMMU.

14. A computer-readable storage medium, wherein the storage medium stores a computer program, and the computer program is executed by a processor to perform the SMMU management method according to any one of claims 1 to 8.

15. An electronic device (10), wherein the electronic device comprises:
a processor (11);
a memory (12) for storing executable instructions of the processor (11); and
the processor (11), configured to read the executable instructions from the memory (12) and execute the instructions to implement the SMMU management method according to any one of claims 1 to 8.
